(19) Europäisches Patentamt
European Patent Office
Office européen des brevets

(11) **EP 4 451 265 A1**

(12) **EUROPEAN PATENT APPLICATION**

(43) Date of publication:
**23.10.2024 Bulletin 2024/43**

(21) Application number: **24170176.2**

(22) Date of filing: **15.04.2024**

(51) International Patent Classification (IPC):
**G10K 15/02** (2006.01)   G10K 11/24 (2006.01)

(52) Cooperative Patent Classification (CPC):
**G10K 15/02;** G10K 11/24

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.04.2023 IT 202300007740**

(71) Applicant: **FERRARI S.p.A.**
**41100 Modena (IT)**

(72) Inventors:
• **PALERMO, Antonio**
  **41100 MODENA (IT)**
• **CIRILLO, Maddalena**
  **41100 MODENA (IT)**
• **BALLATORE, Marco**
  **41100 MODENA (IT)**
• **MAUCERI, Vincenzo**
  **41100 MODENA (IT)**
• **VEZZINI, Lorenzo**
  **41100 MODENA (IT)**

(74) Representative: **Studio Torta S.p.A.**
**Via Viotti, 9**
**10121 Torino (IT)**

(54) **MOTOR VEHICLE WITH A SOUND GENERATION ASSEMBLY**

(57)     A motor vehicle (1) comprises a body (5) defining a passenger compartment (6) of the motor vehicle (1), an axle with a motor (3) and/or at least one movable component, transduction means configured to detect one or more quantities associated with an operation of the motor (3) or of the movable component and to generate a first signal related to said quantities, and sound emitting means (17) configured to emit sound as a function of the first signal.

FIG. 1

EP 4 451 265 A1

**Description**

CROSS-REFERENCE TO RELATED APPLICATIONS

This patent application claims priority from Italian patent application no. 102023000007740 filed on April 20, 2023, the entire disclosure of which is incorporated herein by reference.

TECHNICAL FIELD

The invention relates to a motor vehicle, in particular a sports motor vehicle.

PRIOR ART

As it is known, some motor vehicles feature electric drive devices, i.e. devices that include at least one electric motor for the drive of the relative motor vehicle.

During its operation, the electric motor emits very weak sounds, mostly associated with a vibration of the mechanical components of the electric motor.

This leads to a problem of awareness of the driver with respect to the operating conditions of the electric motor and, more in general, with respect to the performances of the motor vehicle comprising the electric motor.

Basically, from the driver's point of view, the performances of the above-mentioned motor vehicles are not emphasized in an acceptable manner.

Therefore, the performances of the motor vehicles need to be more emphasized or the awareness of the driver relating to said performances needs to be increased.

Furthermore, some drivers are known for being interested in perceiving sounds associated with operation of the motor vehicle, because of reasons dealing with the pleasure of driving.

Therefore, the driver's pleasure of driving needs to be increased, as well.

An object of the invention is to fulfil at least one of the needs discussed above, preferably in a simple, reliable and repeatable fashion.

DESCRIPTION OF THE INVENTION

Said object is reached by a motor vehicle as defined in claim 1.

The dependent claims disclose special embodiments of the invention.

BRIEF DESCRIPTION OF THE DRAWINGS

Hereinafter, an embodiment of the invention will be described, in order to allow the latter to be better understood, by way of non-limiting example and with reference to the accompanying drawings, wherein:

- figure 1 is a schematic side view of a motor vehicle according to the invention,
- figure 2 is a diagram of a portion of the motor vehicle of figure 1,
- figure 3 is a diagram of a variant of the portion of figure 2, and
- figure 4 is a diagram of a further variant of the portion of figure 2.

EMBODIMENTS OF THE INVENTION

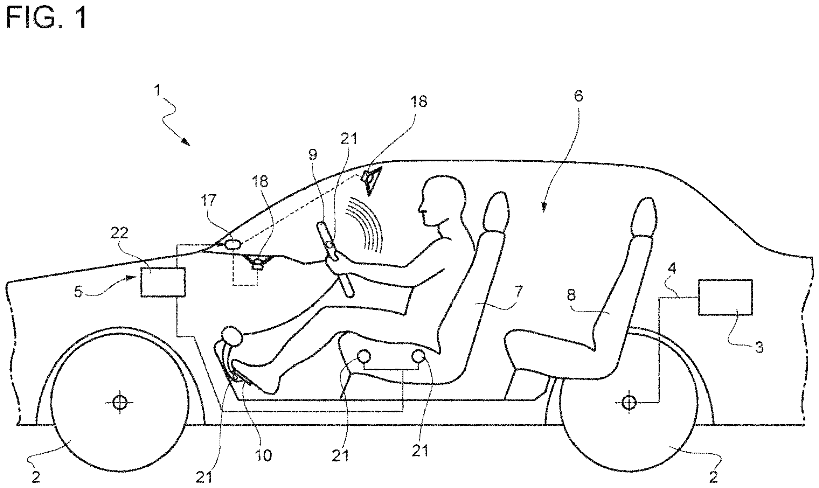

In figure 1, reference number 1 is used to indicate, as a whole, a motor vehicle.

The motor vehicle 1 comprises a plurality of wheels 2, a motor or engine 3, for example an electric motor, and a transmission assembly 4 configured to connect the motor 3 to the wheels 2, whereby the motor 3 can deliver power to the wheels 2 through the transmission assembly 4.

More in general, the motor 3 and the transmission assembly 4 are part of an axle of the motor vehicle 1. The axle comprises, in general, a plurality of movable components, for example besides the motor 3; in particular, the movable components move as a function of the operation of the motor 3 or, more in general, of the operation of the motor vehicle 1 on the road. The movable components can be part of the transmission assembly 4 or of the motor 3, i.e. they can comprise portions of the transmission assembly 4 and/or portions of the motor 3.

Specifically, the motor 3 is an electric motor, whereby the axle also is an electric axle.

According to some basic or preferred aspects of at least one or more examples of this description (basic aspects that will be discussed below in a more specific manner), the motor vehicle 1 has one or more sensors or transducers, which detect a vibrational and/or electromagnetic response of the axle, the sensors or transducers being arranged in positions suited to capture the response during the operation of the motor vehicle 1 in a maximized fashion.

The sensors or transducers generate signals corresponding to the detected response; the signals are led to a processor or control unit, which can be part of a dedicated control unit or be integrated in an audio system of the motor vehicle 1, with the aim of processing a characteristic signal of the operation of the motor 3 or, more in general, of the axle, the characteristic signal having dynamics that are indicative of the driving state or mode of the motor vehicle 1.

For this purpose, the characteristic signal can be filtered, based on the frequency, by the processor by means of a band-pass filter of the processor.

The order or, more in general, the coefficients or the features of the filter are determined by the processor as a function of the fundamental frequency of revolution of the motor 3 or of the wheels 2.

In particular, the characteristic signal is advantageously subjected to a transposition operation, in which, after the possible filtering, the characteristic signal is treated in real time so that the frequency content corresponding or belonging to one or more predetermined frequency bands is transposed by means of a technique known as "pitch shifting" or transposition of frequency towards one or more different bands, higher or lower on the scale of frequencies, with the aim of enhancing the desired acoustic content, according to the taste of a certain category of users, though maintaining the characteristics of the response of the operating axle.

This pitch-shifted signal, i.e. the signal obtained from the transposition operation, is then transferred to the audio system or is received by the audio system, which can further adjust it through filtering and levels, and is emitted through loudspeakers of the audio system with the aim of feedback on the operating state of the motor vehicle 1 for the driver thereof.

In particular, in this way, acoustically unpleasant or even disturbing characteristics (for example, associated with high-frequency noises of the transmission 4, of the motor 3 or of the movable components, in particular with frequencies exceeding 500 Hz or, especially, exceeding 1kKz) or, anyway, undesired characteristics of the characteristic signal are transposed to a frequency band typically associated with acceptable or pleasant acoustic sensations.

Specifically, contributions belonging to a range between 500 Hz and 10 kHz are transposed or scaled down to a range between 20 Hz and 2 kHz.

More specifically, contributions belonging to a range between 500 Hz and 2 kHz are transposed to a range between 20 Hz and 500 Hz, whereas contributions belonging to a range between 2 kHz and 10 kHz are transposed to a range between 20 Hz and 2 kHz or, more in particular, between 500 Hz and 2 kHz.

The top limits of the above-mentioned ranges preferably exclude the relative specific value, i.e. the ranges are open at the top.

The frequency content of the characteristic signal is transformed regardless of the constructive and functional features of the axle.

The emission of sounds can only take place inside the motor vehicle 1 or, in a further embodiment, with a combination of inner and outer loudspeakers, the outer ones being aimed at warning pedestrians of the presence of the motor vehicle 1 or that it is approaching.

Alternatively or in addition, the characteristic signal, before the pitch-shifting operation, undergoes a regularization process based on the correction of the fluctuations thereof with respect to a desired profile.

According to an example, the electric motor 3 is configured to emit or generate a variable or, more precisely, rotating magnetic field during its operation.

During the operation, the electric motor 3 is powered with a supply current, which provides the electric motor 3 with the electrical energy needed to deliver a torque or a power.

Specifically, the electric motor 3 is a motor powered with an alternating current, more specifically a synchronous motors or a permanent magnet motor. In other words, the supply current is an alternating current. These last aspects are not essential, since the electric motor 3 could also be an asynchronous motor or an induction motor or, more in general, any motor emitting a rotating or variable magnetic field during its operation. Even more in general, as explained more in detail below, the electric motor 3 could even be a motor adjusted to induce magnetic field variations in a transduction device due to the movement or, more precisely, the rotation of its components during the operation.

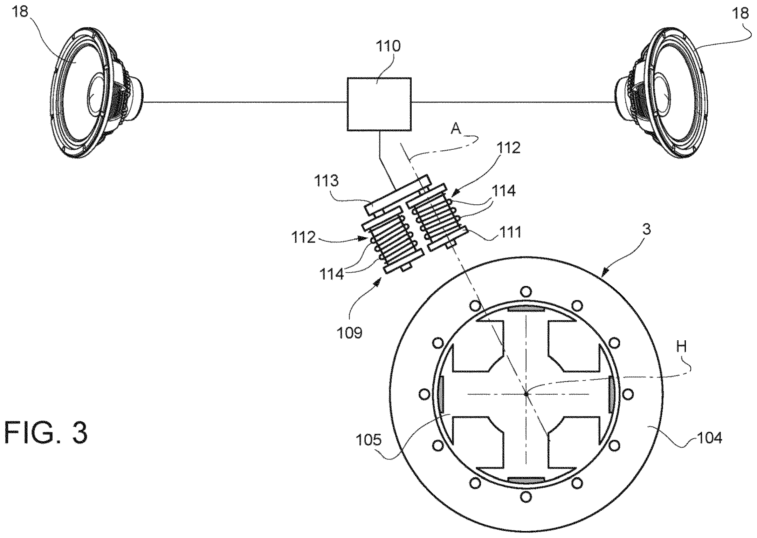

As shown, for example, in figure 3, the electric motor 3 can have a stator 104 and a rotor 105 rotating around the stator 104. The stator 104 and the rotor 105 are coaxial, namely they have an axis H. The rotor 5 can rotate around the axis H.

In particular, the stator 104 is arranged radially on the outside of the rotor 105, whereby it externally surrounds the rotor 105.

In detail, the electric motor 3 comprises one or more permanent magnets incorporated in the rotor 105 and configured to generate or emit a constant magnetic field. Furthermore, the electric motor 3 comprises windings carried, in a fixed position, by the stator 104 and powered with an alternating current in order to generate or emit a rotating magnetic field followed, in a synchronous manner, by the constant magnetic field.

The electric motor 3 can be part of an electric motor assembly, which, in turn, is part of the motor vehicle 1. Furthermore, the motor vehicle 1 comprises a body 5, which is suspended with respect to the wheels 2 by means of known suspensions, which are not shown herein.

The body 5 defines a passenger compartment 6 of the motor vehicle 1 to accommodate the driver and, if necessary, one or more passengers or, more in general, at least one user.

Inside the passenger compartment 6, the motor vehicle 1 comprises a seat 7 to accommodate the user. Specifically, the seat 7 is for the driver of the motor vehicle. Furthermore, the motor vehicle 1 comprises, in addition, a seat 8 and other seats not shown herein for the passengers.

Furthermore, the motor vehicle 1 comprises some control devices or controls to allow the driver to drive the motor vehicle 1, among which there are, for example, a steering wheel 9, the pedals 10, only one of them being shown in figure 1, and the like.

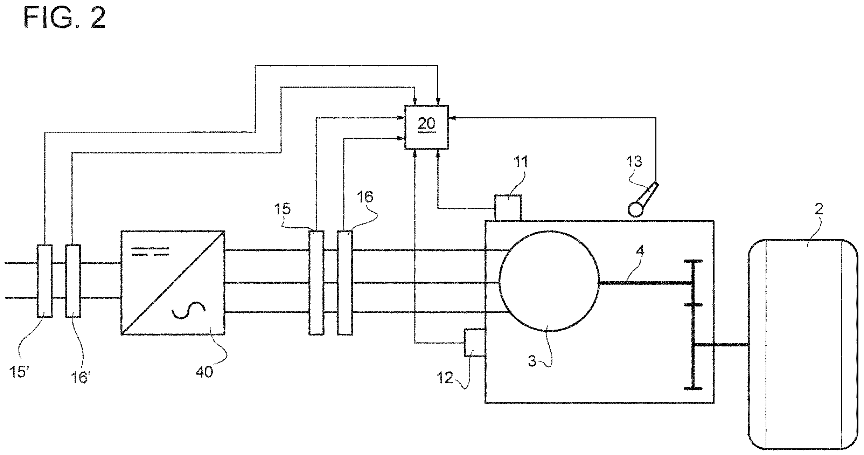

In addition, the motor vehicle 1 comprises a transduction assembly comprising a plurality of transducers 11, 12, 13, 15, 16 (figure 2) configured to detect respective quantities associated with an operation or a movement or a vibration of the motor 3 or, more in general, of the axle, with particular reference to the movable components thereof, i.e. associated with an operation or a movement or a vibration of one or more of the movable components. In other words, the quantities can be associated with an operation or a movement or a vibration of a movable component of the axle.

Alternatively, the transduction assembly could possibly comprise only one or any combination of transducers 11, 12, 13, 15, 16.

In other words, the electric motor assembly comprises a transduction device, which includes at least one sensor device or a transducer and an emitting device, as explained more in detail, for example, below.

In particular, the transduction assembly is configured to detect at least one quantity related to electromagnetic phenomena, such as an electric current or a magnetic field, i.e. an electric quantity.

In general, the motor vehicle 1 could clearly comprise additional motors that are not shown herein, in particular electric motors, for example to deliver power to the wheels 2 of the front of the motor vehicle 1, whereas the motor 3 delivers power to the wheels 2 of the rear of the motor vehicle 1. In other words, the invention is not limited to one single motor associated with specific wheels 2, but it generally relates to one or more motors, in particular electric motors, generically associated with one or more wheels 2, without lacking generality. The transduction assembly or device could accordingly comprise further transducers to detect quantities associated with the operation of the additional electric motors or of the relative axles.

For the sake of clarity, transduction assembly and transduction device can be considered synonyms. Generally speaking, the terms assembly and device can be considered interchangeable synonyms.

The motor vehicle 1 comprises an emitting assembly or device 17, in particular a sound emitting assembly 17 configured to emit sound inside the passenger compartment 6 as a function of the above-mentioned quantities. The assembly 17 can comprise one or more loudspeakers 18, for example the ones integrated in the body 5 and/or part of speakers external to the body 5, i. e. speakers coupled or fixed to the body inside the passenger compartment 6. The loudspeakers 18 directly emit the sound in the passenger compartment 6. For example, the loudspeakers 18 emit sound with frequencies ranging from 20 Hz to 20 kHz, i.e. sound with frequencies in the human hearing range.

For example, the loudspeakers 18 could not be part of the emitting assembly or device and be connected or coupled to said emitting assembly or device. In this case, the emitting assembly or device could be a device configured to supply the loudspeakers 18 with a signal, the signal being reproducible by the loudspeakers 18. For example, the emitting assembly or device could even be an electric connection, an acoustic amplifier or, more in general, a current treatment device such as a distortion device.

The loudspeakers 18 of the outer speakers can emit sound with a greater intensity than the one of the loudspeakers 18 of the body 5. For example, the loudspeakers 18 of the outer speakers can emit sound with an intensity ranging from 90 to 140 decibels, in particular measured at a distance of circa one metre from the outer speakers, whereas the loudspeakers 18 of the body 5 can emit sound with an intensity ranging from 40 to 120 decibels, in particular measured in the passenger compartment 6.

The transducer 11 is configured to detect a first quantity indicative of an acceleration, in particular a linear acceleration, or of a vibration of a casing of the motor 3 or of a movable component of the axle, namely of the axle as a whole with respect to the body 5. For example, the transducer 11 comprises an accelerometer, for example an inertial measuring unit, in particular fixed to the casing of the motor 3 or to the movable component of the axle or to any component of the axle.

The transducer 12 is configured to detect a second quantity indicative of a magnetic field generated by the motor 3 or by the movable component of the axle, for example a current induced by the magnetic field. For example, the transducer 12 comprises a conductor, in particular a coil, immersed in the magnetic field generated by the motor or by the movable component of the axle. In this way, the generated magnetic field, for it is variable, induces a current on the conductor. Therefore, the transducer 12 comprises, for example, a sensor to detect the induced current.

The transducer 13 is configured to detect a third quantity indicative of a sound pressure wave generated by the motor 3 or by the movable component of the axle or by the axle in general. As a matter of fact, the operation of the motor 3 or of the movable component of the axle involves anyway an audible, despite feeble sound. For example, the transducer 13 could be a microphone located close to the motor 3 or to the movable component of the axle or to any component of the axle.

The transducer 15 is configured to detect a fifth quantity indicative of the supply current supplied to the motor 3.

The motor vehicle 1 preferably comprises an electrical network to power the motor 3; the network comprises, in turn, a DC-AC converter or inverter 40, two conductors for the passage of direct current, which connect the inverter 40 to an electrical energy source, for example a battery, and a three-phase connection, namely with three phases, between the inverter 40 and the motor 3 for the passage of alternating current.

In particular, the transducer 15 measures the supply current. For example, the transducer 15 is an ammeter.

The transducer 15 could detect the supply current on one or more of said phases. Furthermore, the motor vehicle 1 could comprise, alternatively or in addition to the transducer 15, a transducer 15' configured to detect the supply current on the conductors for the passage of direct current.

The transducer 16 is configured to detect a sixth quantity indicative of the voltage at the ends of the motor 3, i.e. the voltage on one or more of the phases for the passage of alternating current. Alternatively or in addition to the transducer 16, the motor vehicle could comprise a transducer 16' configured to detect a quantity indicative of the supply voltage of the motor 3, i.e. the voltage on the conductors for the passage of direct current. In particular, the transducer 16 or 16' measures the voltage. For example, the transducer 16 or 16' is a voltmeter.

Each one of the transducers 11, 12, 13, 14, 15, 16, 15', 16' is configured to generate a signal related to the detected quantity and is coupled to a signal processing unit 20, whereby the latter receives the signals generated by the transducers 11, 12, 13, 14, 15, 16, 15', 16'.

The signal processing unit 20 and the transducers 11, 12, 13, 14, 15, 16, 15', 16' can form or be part of the transduction assembly, which can be configured to generate a signal related to the quantities detected by the transducers 11, 12, 13, 14, 15, 16, 15', 16'. More precisely, said signal is a condensed signal and is a function of the signals generated by the transducers 11, 12, 13, 14, 15, 16, 15', 16'. Otherwise, each one of the generated signals can be treated separately by the signal processing unit 20.

More in general, the transduction assembly can comprise one transducer or any combination of transducers 11, 12, 13, 14, 15, 16, 15', 16', with the possible addition of the signal processing unit 20.

The signal processing unit 20 can be part of a control unit of the motor vehicle 1 or it can be a dedicated unit.

The signal processing unit 20 is connected to the transducers 11, 12, 13, 14, 15, 16, 15', 16', for example by means of a CAN network ("Control Area Network") of the motor vehicle 1.

The sound emitting assembly 17 emits the sound as a function of the signal generated by the transduction assembly.

The transduction assembly or, specifically, the signal processing unit 20 is preferably configured to generate the condensed signal by applying a sensor fusion algorithm or technique to at least two or more of the quantities detected by the transducers 11, 12, 13, 14, 15, 16, 15', 16'. In particular, though not necessarily, the sensor fusion algorithm is applied to all quantities.

For example, the condensed signal could be representative of a dynamic state of the motor vehicle 1. In other words, the condensed signal could be a state quantity or a state vector or, more in general, a state, with the meaning that the terms state quantity, state vector and state have in the common control theory.

For example, the condensed signal or state could be a deterministic function, for example a linear or non-linear one, of the detected quantities or of the relative signals, whereby the sensor fusion algorithm would comprise the application of a deterministic observer, for instance Luenberger observer, in the linear case.

Otherwise, the sensor fusion algorithm could comprise the application of a stochastic observer, for example Kalman filter, possibly in its non-linear variants, in case a linkage between the detected quantities or the relative signals and the condensed signal or the state was modelled as a non-linear function. In this case, the condensed signal or the state would be a function, specifically a stochastic function, of the detected quantities or of the relative signals.

According to another example, the condensed signal or the state could even be the result of a linear or non-linear combination of the signals related to the detected quantities.

The condensed signal or the state does not necessarily have to have a precise physical meaning, since it is obtained as a function of the detected quantities, so that it is anyway characteristic of the operation of the motor 3 or of the movable component of the axle and, more in general, of the motor vehicle 1, even if it is not directly associable with operating quantities of the motor vehicle 1 with an easy physical interpretation.

Conveniently, the signal generated by the transduction assembly, which could simply be a set or group of signals independently generated by the transducers 11, 12, 13, 14, 15, 16, 15', 16', or - more precisely - the condensed signal can properly be conditioned before being supplied to the sound emitting assembly 17 for sound emission.

In other words, the signal generated by the transduction assembly could be a vector of the independently generated signals or a vector in which some components are defined by some of the independently generated signals and other components are defined by condensations of the remaining independently generated signals.

After the conditioning, the sound emitting assembly 17 emits sound as a function of the conditioned signal.

For example, the signal processing unit 20 or another signal processing unit not shown herein can be configured to perform the conditioning.

In particular, the conditioning comprises filtering the signal generated by the transduction assembly by means of a frequency-based signal, i.e. a band-pass filer, in particular a low-pass filter. The signal processing unit 20 is configured to filter the signal generated by the transduction assembly by means of the filter, for example stored in the signal processing unit 20 or determined as a function of a frequency of rotation of the motor 3 or of the wheels 2, in particular according to a principle stored by the signal processing unit 20. For example, the signal processing unit 20 determines the filter by determining the order thereof and/or the coefficients thereof.

Advantageously, downstream of the possible filtering, the conditioning comprises performing a pitch-shifting technique on the signal generated by the transduction assembly (if necessary, filtered) or the processing unit 20 is configured to perform the pitch-shifting technique on the signal generated by the transduction assembly (if necessary, filtered).

More precisely, performing the pitch-shifting technique means transposing one or more frequencies of a contribution of the signal from a first frequency range to a second frequency range distinct from the first frequency range, in particular by applying, to each one of the frequencies of the first frequency range, a corresponding offset such that each one of the frequencies of the first frequency range shifts to the second frequency range.

Hereinafter, the first frequency range and the second frequency range will more simply be referred to as first range and second range, respectively.

Not all frequencies of the first range necessarily have to be transposed to the second range; hence, the transposition could only affect some specific frequencies of the first range or all frequencies of the first range, according to an alternative embodiment.

In practice, the actual performance of the pitch-shifting technique can take place according to any one of numerous known methods, among which there are, for example, those methods known as "phase vocoder", OLA (Overlap-Add), PSOLA (Pitch-Synchronous Overlap-Add), WSOLA (Waveform-similarity based OLA), "Ocean" (publication "Low Latency Audio Pitch Shifting In The Frequency Domain" by Juilleart & Hirsbunner, published on November 1, 2010 during the conference "International Conference on Audio, Language and Image Processing"), etcetera.

The first range and the second range are not necessarily continuous or in the field of real numbers, but they could also be discrete or in a different field of numbers.

As already mentioned above, the term transposing can also be interpreted as applying an offset, wherein the offset could be a function of the frequency to which it is applied, for example linearly or non-linearly decreasing as the frequency decreases, or constant, i.e. independent of the frequency.

In particular, the applied offset causes a decrease in the frequency. In other words, the transposition is a downward transposition. However, this is not strictly necessary, since the transposition could also or only be an upward transposition according to other embodiments.

Therefore, in particular, the second range has a bottom end that is smaller than a bottom end of the second range.

The first and the second range can intersect one another, specifically based on the applied offset. Indeed, clearly, in case of small applied offsets, for example with decreasing offsets, the applied offset at an upper end of the first range is at a frequency still contained in the first range and, at the same time, contained in the second range. Alternatively, the first and the second range do not intersect one another, i.e. they are separate and their intersection is empty.

Furthermore, the first and the second range could have different widths, in particular since the offset is a function of the frequency to which it is applied. The second range preferably has a smaller width than the first range.

Specifically, the first range is defined within a range between 500 Hz and 10 kHz or is defined by said range.

Furthermore, for example independently of the first range, the second range is defined within a range between 20 Hz and 2 kHz or is defined by said range.

More specifically, frequencies within the range between 500 Hz and 2 kHz are transposed to a range between 20 Hz and 500 Hz, whereas frequencies within the range between 2 kHz and 10 kHz are transposed to a range between 20 Hz and 2 kHz or, more in particular, between 500 Hz and 2 kHz.

Therefore, the conditioned signal can be the result of the execution of the pitch-shifting technique, downstream of the possible filtering of the signal generated by the transduction assembly.

The loudspeakers 18 receive the conditioned signal from the signal processing unit 20, to which they are connected, and are configured to emit the sound in a manner corresponding to the received conditioned signal.

In other words, the conditioned signal is reproducible by the loudspeakers 18. The loudspeakers 18 basically reproduce the received conditioned signal.

More in general, the signal, as a function of which the sound emitting device 17 emits sound, could be reproducible by the loudspeakers 18, in particular directly. The sound emitting device 17 could basically reproduce the signal, in particular by means of the loudspeakers 18, thereby emitting sound as a function of the signal.

The expression "in a manner corresponding" implies, in particular, that the sound is an injective function of the conditioned signal, but this does not mean that the loudspeakers 18 (which, for example, are part of the audio system) do not apply further conditioning to the conditioned signal, for example as a function of the conditioned signal itself.

The operation of the loudspeakers 18, which convert a received signal into sound, is known and, therefore, will not be described in detail.

For the purposes of this invention, the term "convert" could be interpreted as synonym for "reproduce".

Specifically, the loudspeakers 18 emit the sound within the passenger compartment 6 of the motor vehicle 1, namely they are located inside the passenger compartment 6.

Alternatively, the loudspeakers 18 can face the outside of the motor vehicle 1, so that the sound is emitted on the outside of the motor vehicle 1. For example, the loudspeakers 18 can be coupled to the body 5.

Alternatively, the loudspeakers 18 can be located in the area of the electric motor 3. For example, the loudspeakers 18 can be coupled in a fixed position with respect to the stator 104 or, more precisely, fixed to an outer casing of the electric motor 3.

More precisely, the signal processing unit 20 is configured to perform the conditioning by filtering the signal, for example by means of one or more frequency-based filters, in particular LTI filters or other filters known as low-pass filters, and by amplifying the amplitude of the signal by means of one or more gains.

For example, the filtering can be dynamic, i.e. performed as a function of additional quantities associated with an operation of the motor vehicle 1 or of the motor 3 or of the movable component of the axle and detected by means of respective transducers, among which there are, for example, the speed or the torque outputted by the motor 3 or the speed of the motor vehicle 1 or the torque of the motor vehicle 1 and the like.

In particular the gains and/or the configuration of the filters and/or the characteristic or cutoff frequencies of the filters can be a function of one or more of the additional quantities.

The motor vehicle 1 can advantageously also comprise one or more vibration emitters 21 coupled or fixed to a solid body or panel of the motor vehicle 1 inside the passenger compartment 6.

Each one of the vibration emitters 21 is configured to cause a vibration of the solid body or panel, to which it is coupled or fixed, in a coordinated manner with the sound emitted by the sound emitting assembly 17.

In other words, the motor vehicle 1 comprises a control unit 22 coupled to the vibration emitters 21 and to the transduction assembly or to the signal processing unit 20 or to the sound emitting assembly 17.

The panel could, for example, be part of the body 5.

The control unit 22 is configured to extract information from one or more of the transduction assembly, the signal processing unit 20 and the sound emitting assembly 17. The information relates to the emitted sound or to the conditioned signal or to the signal emitted by the transduction assembly, i.e. the transduction signal.

Hence, the control unit 22 is configured to control the vibration emitters 21 as a function of the extracted information, whereby the emitted sound is coordinated with the vibrations of the solid body or panel.

The signal processing unit 20 could be part of or be integrated in the control unit 22.

The solid body or panel is preferably designed to come into contact with a user of the motor vehicle 1, whether they are the driver or a passenger, or - in other words - has a function that implies a contact with the user. The solid body or panel is basically configured to cooperate with the user for a purpose associated with the use of the motor vehicle 1.

In this way, the vibrations of the solid body or panel caused by the vibration emitters 21 can be transmitted, in use, to the user in a coordinated manner with the sound emitted by the sound emitting assembly 17.

Furthermore, for example, if the vibrations had frequencies in the human hearing range, the vibrations would correspond to an additional sound coordinated with the one emitted by the sound emitting assembly 17.

For example, the solid body or panel is part of one of the pedals 10 or of the steering wheel 9. In this way, the vibrations caused by the vibration emitters 21 can be transmitted to the driver, who drives the motor vehicle 1 by touching the steering wheel 9 with the hands and by pressing the pedals 10 with the feet.

Alternatively or in addition, the solid body or panel is part of the seat 7, so that the vibrations caused by the vibration emitters 21 are transmitted to the user sitting on the seat 7.

According to other variants, the panel could also be part of the dashboard of the motor vehicle 1 or of the roof of the motor vehicle 1 or of similar positions of the motor vehicle 1, which normally do not come into direct contact with the driver while driving the motor vehicle 1. In any case, the vibrations can be visible to the driver or, more in general, to the user or can be transmitted to them by means of propagation through the entire body 5. Furthermore, the vibrations could correspond to sounds recognisable by the user as coming from the panel.

According to an example, the vibrations emitted by the vibration emitters 21 and, consequently, the vibrations caused by them to the solid body or panel could have a frequency outside the human hearing range. The frequency of the vibrations is correlated with the frequency and/or the intensity of the sound emitted by the sound emitting assembly 17. The correlation is obtained by means of the control unit 22, which is configured to define or determine the correlation itself.

In particular, the frequency of the vibrations increases with the frequency of the emitted sound, for example linearly or in a non-linear manner.

Independently, the intensity of the vibrations increases with the intensity of the emitted sound, for example linearly or in a non-linear manner.

Independently of the frequency, the amplitude of the vibrations can be correlated with the frequency and/or the intensity of the sound emitted by the sound emitting assembly 17. The correlation is obtained by means of the control unit 22, which is configured to define or determine the correlation itself.

Specifically, even though this is not necessary, the vibration emitters 21 are an even number, half of them being located in the area of a front portion of the seat 7 and the other half being located in the area of a rear portion of the seat 7.

More specifically, the two halves are connected to the control unit 22 by means of two parallel branches. In each branch, the corresponding half is arranged in series.

Otherwise, the vibration emitters 21 could also be, if necessary, all independent of one another or all interconnected to one another.

In the variant of figure 3, the transducer 12 is replaced by or, more simply, is a transduction assembly or device, which includes at least one sensor device or transducer 109 and an emitting device 110.

The transducer 109 is configured to detect the magnetic field or, more precisely, the variation of the magnetic field, for example generated by the operating electric motor 3. The variation is associated with, i.e. corresponds to the operation of the electric motor 3.

Alternatively or in addition, as explained more in detail below, the transducer 109 can be configured itself to generate a variable magnetic field or a magnetic field variation associated with the operation of the electric motor 3, possibly in cooperation or interaction with one or more components or portions of the electric motor 3, said components or portions being movable in a manner corresponding to the operation of the electric motor 3.

For example, the transducer 109 could comprise a resolver or, more in general, a known inductive movement transducer configured to determine an angular movement of the rotor 105 with respect to the stator 104. As it is known, the resolver is configured to be powered with an alternating current so that the resolver generates a variable magnetic field, whose variation is associated with the operation of the electric motor 3. Furthermore, the resolver comprises two windings subjected to the variable magnetic field, whose variation alternately induces an induced current on the windings. Therefore, the resolver detects the variation of the magnetic field generated in association with the operation of the electric motor 3 through the induction of the current on the windings.

More in detail, the resolver includes a rotor rotating at an angular speed equal to or determined by the angular speed of the rotor 5 and a stator carrying an excitation winding powered by the alternating current and the above-mentioned windings subjected to the variable magnetic field. The rotor carries a further winding, on which a current is induced by the magnetic field generated by the excitement winding powered by the alternating current. By so doing, the winding carried by the rotor generates the variable magnetic field, whose variation is detected by the above-mentioned windings. The magnetic field variation is a function of the angular speed of the rotor of the resolver and, hence, of the angular speed of the rotor 105.

More precisely, the transducer 109 has at least one sensitive portion, which is arranged in a region or position subjected to the variable magnetic field when the motor 3 is operating.

The sensitive portion can be fixed with respect to the stator 104. In particular, the sensitive portion can be coupled to the electric motor 3 directly or in the area of the electric motor 3. More in particular, the sensitive portion can be coupled to the stator 104 directly or in the area of the stator 104.

The sensitive portion is defined, more in detail, by an electric circuit or by a winding, which, in the above-mentioned position, is crossed by the magnetic field.

The electric circuit or the winding can be external or internal to the electric motor 3, namely it can be part of the electric motor 3 or be integrated into the electric motor 3.

Since the magnetic field is variable and, more precisely, rotating, the magnetic field induces an electric current on the circuit it crosses. The induced current is representative of the variation of the magnetic field or corresponds to the variation of the magnetic field, in other words. This directly and necessarily results from Faraday-Neumann-Lenz's law, according to which a time variation of a magnetic flux flowing through a circuit is equal to an electromotive force induced on the circuit, corresponding, in turn, to an electric current induced along the circuit.

The transducer 109 is configured to detect the variation of the magnetic field by generating the induced electric current corresponding to said variation.

Hence, the induced current is directly correlated with or corresponds to the magnetic field.

Owing to the above, in other words, the electric motor assembly or the transduction device comprises at least one generator device configured to generate a variable magnetic field associated with or corresponding to the operation of the electric motor 3, i.e. characteristic of the operation of the electric motor 3. Furthermore, the electric motor assembly or the transduction device comprises an electric circuit or a winding arranged so as to be subjected to the variable magnetic field, whereby a characteristic current of the operation of the electric motor 3 is induced on the electric circuit or winding.

More in detail, the transducer 109 comprises at least one coil 112 wound around an axis A

Specifically, the transducer 109 further comprises a permanent magnet 113. In particular, the permanent magnet 113 extends along the axis A. More in particular, the coil 112 is wound on the permanent magnet 113 or surrounds the permanent magnet 113 around the axis A.

Therefore, the coil 112 and the permanent magnet 113 form or are part of a magnetic pick-up 111, for example of the known kind.

The permanent magnet 113 can interact with movable components or portions of the electric motor 3, whereby a variable magnetic field is generated in a manner corresponding to the operation of the electric motor 3.

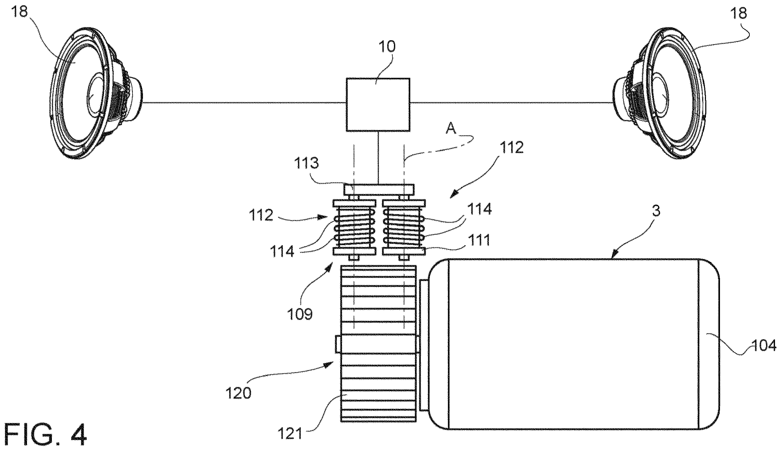

Indeed, according to a variant shown in figure 4, the electric motor 3 comprises a movable portion 120, in particular movable with respect to the stator 104 and fixed with respect to the rotor 105.

The movable portion 120 moves during the operation of the electric motor 3 based on the operation itself, namely in a way corresponding to the operating point of the electric motor 3. For the purposes of this disclosure, the terms operation and operating point can be interchangeable.

More in detail, the movable portion 120 is coupled to the rotor 5 and can rotate around an axis, specifically parallel to the axis H, more specifically coinciding with the axis H. The movable portion 120 rotates as a function of the rotation of the rotor 105; in other words, there is a one-to-one correspondence between the rotation of the movable portion 120 and the rotation of the rotor 105, for example by means of a mechanical transmission coupling the movable portion 120 to the rotor 105. In particular, the movable portion 120 rotates in an integral manner or rigidly with the rotor 105.

In particular, the movable portion 120 comprises a phonic wheel 121, namely, for example, a wheel having a plurality of protuberances or teeth extending radially or a plurality of slits or slots extending radially.

The phonic wheel 121 is a known member and can have different shapes.

More in detail, the phonic wheel 121 is of the inductive kind and, therefore, comprises or is defined by a ferromagnetic material. More n general, the movable portion 120 can comprise a ferromagnetic material, in particular so as to be inductive.

The permanent magnet 113 is arranged in a position such as to magnetically interact with the movable portion 120 and, more precisely, with the phonic wheel 121 so as to generate a variable magnetic field corresponding to the operation or to the operating point of the electric motor 3.

Indeed, the movement of the movable portion 120 affects the magnetic field generated by the permanent magnet 113, whereby the resulting magnetic field in the area of the permanent magnet 113 becomes variable as a function of the movement of the movable portion 120 and, hence, of the operating point of the electric motor 3.

The above-mentioned electric circuit is still arranged so as to be subjected to the resulting variable magnetic field, whereby the latter induces an electric current on the electric circuit in a way similar to the one described above.

The shape of the movable portion 120 or of the phonic wheel 121 and the relative arrangement between the movable portion 120 or the phonic wheel 121 and the permanent magnet 113 are clearly adapted to enable the generation of the variable magnetic field correspondingly to the operation of the electric motor 3 and the consequent induction of electric current on the electric circuit of the transducer 109.

The movable portion 120 could be any component of the electric motor 3 that is suited or adapted to interact with the permanent magnet 113 so as to generate the variable magnetic field, in particular flowing through the electric circuit of the transducer 109. For example, the movable portion 120 could comprise a portion of the rotor 105 or even be defined by the rotor 105.

In general, the coil 112 can comprise one or more loops 114, each circumscribing or defining a closed surface orthogonal to the axis A. The loops 114 are aligned with one another along the axis A.

In the specific embodiment of figure 2, the axis A is incident to the axis H. In other words, the axis A extends radially with respect to the axis H. This is optional; alternatively, the axis A could be parallel to the axis H. In particular, the coil 112 could be arranged in front of the electric motor 3, more in particular in front of the rotor 105.

The coil 112 has a radial distance from the electric motor 3 that is sufficient to be crossed by the magnetic field generated by the operating electric motor 3.

The coil 112 faces the electric motor 3.

Alternatively, the stator 104 or the rotor 105 can define a cavity to house the coil 112, whereby the coil 112 is arranged inside the cavity.

In the specific variant of figure 4, the coil 112 radially faces the phonic wheel 121; in particular, the axis A extends radially with respect to the axis of the phonic wheel 121. This is optional, since the coil 112 could also be arranged in front of the phonic wheel 121 according to an axial direction.

In the context of figure 3, the following equation applies:

$$\epsilon_p = -d\phi/dt = \omega Bs \cdot \sin \omega t,$$

wherein $\varepsilon_p$ is the electromotive force induced on the electric circuit, $\phi$ is the flux of the magnetic field through the electric circuit, $t$ is time, $\omega$ is the angular speed or rotation speed of the rotating magnetic field, $B$ is the module of the resulting magnetic field vector, associated with the rotating magnetic field, and s is the surface defined by the loops 114.

In turn, the angular speed $\omega$ is, in general, a function of the supply current of the electric motor 3 or depends on the electric current, in particular through the following equation:

$$\omega = 2\pi v/p,$$

wherein $v$ is a frequency of the supply current and $p$ is the number of pole pairs of the electric motor 3.

Furthermore, as it is known, the module of the resulting magnetic field vector $B$ depends on the angular speed $\omega$ and on the intensity of the supply current of the electric motor 3.

Therefore, the current induced on the electric circuit of the transducer 109 is a function of the supply current of the electric motor 3 or, more specifically, of the intensity and of the frequency of the supply current.

In other words, each characteristic of the induced current, for example the frequency thereof, has a direct one-to-one linkage with the supply current.

Therefore, the induced current is a descriptive identifier of the supply current, i.e. it has a correspondence with the supply current, namely corresponds to the supply current. In general, for the purposes of this description, terms such as corresponds, corresponding, correspondence and the like relate to a functional relationship, namely a causal and deterministic association.

Similarly, the supply current determines the speed of the electric motor 3 or of the rotor 105, specifically coinciding with the angular speed of the magnetic field $\omega$, as well as the torque delivered by the electric motor 3.

Since the speed and the torque of the electric motor 3 represent the operation or the operating point of the electric motor 3, the induced current also is a descriptive identifier of the operating point of the electric motor 3, i.e. it corresponds to the operating point.

In other words, the induced current is a function of the operation or of the operating point of the electric motor 3.

The linkage or correspondence of the supply current and of the operating point of the electric motor 3 with the current induced on the circuit of the transducer 109 clearly applies, in general, for any motor generating a variable magnetic field and not only for the specific electric motor 3 discussed herein.

Furthermore, the same linkage or correspondence exists independently of the relative position between the circuit of the transducer 109 and the electric motor 3, as long as the circuit is anyway crossed by the variable magnetic field.

Hence, the emitting device 110 could be, for example, an electrical connection suited to be crossed by the induced current, for example an electrical wire. Indeed, the induced current can already be considered in itself a signal of electric current as a function of the magnetic field.

Actually, the emitting device 110 preferably comprises an acoustic amplifier or, more in general, a current treatment device, for example a distortion device, configured, generally speaking, to treat or, more specifically, to amplify the induced current, thus providing as an output the electric current signal.

The acoustic amplifier can be of the known kind, for example a Hi-Fi amplifier or an amplifier for an electric guitar. For example, the acoustic amplifier can be a valve amplifier or a transistor amplifier or a digital amplifier.

More in detail, the acoustic amplifier is configured to provide the induced current with a gain, thus emitting as an output the electric current signal.

The emitting device 110 basically performs a conditioning like the one previously mentioned in this description and can, for example, be part of the signal processing unit 20. Similarly, emitting devices such as the emitting device 110 could be part of the transducers 11, 12, 13, 14, 15, 16, 15', 16', even though not necessarily for each one of the transducers 11, 12, 13, 14, 15, 16, 15', 16', but even for a single one of them or more.

The output signal of the emitting device 110 can be supplied to the sound emitting assembly 17 or said signal itself is implied in the sound emitting assembly 17 in case the emitting device 110 is part of the sound emitting assembly 17.

The emitting device 110 is not essential and could be absent.

On the other hand, emitting devices such as the emitting device 110 could receive the signals respectively generated by the transducers 11, 12, 13, 14, 15, 16, 15', 16' and condition said signals, for example similarly to what happens with the signal emitted by the transducer 109.

Each one of the emitting devices, just like the emitting device 110, can be part of the transduction assembly or, more specifically, of the signal processing unit 20.

The condensed signal can be obtained, for example, starting from conditioned signals or from a mix of conditioned and non-conditioned signals, based on the presence or absence of some of the emitting devices.

Furthermore, the condensation of the signal is optional. As a matter of fact, the transduction assembly could also comprise only one of the transducers 11, 12, 13, 14, 15, 16, 15', 16', 109 and, if necessary, the relative emitting device 110 or a similar emitting device.

The loudspeakers or loudspeaker devices 18 can be connected to the emitting device 110 or to the similar emitting devices to receive the electric current signal or signals emitted by means of the device 110 or of the similar emitting devices.

The loudspeakers 18 are configured to emit a sound corresponding to the received electric current signal or signals.

The acoustic amplifier can be configured to adjust the electric current signal outputted by the emitting device 110 for the loudspeakers 18.

The loudspeakers 18 could face the outside of the motor vehicle 1, so that the sound is emitted on the outside of the motor vehicle 1. For example, the loudspeakers 18 could be coupled to the body of the motor vehicle 1.

Alternatively, the loudspeakers 18 can be located in the area of the electric motor 3. For example, the loudspeakers 18 can be coupled in a fixed position with respect to the stator 4 or, more precisely, fixed to an outer casing of the electric motor 3.

According to an example of the operation of the electric motor assembly of figure 3 or 4, the frequency of the supply current or the rotation speed of the magnetic field are translated into a frequency of the induced current.

Independently, the electric current signal emitted by the emitting device 110 can have the same frequency as the induced current. In other words, the amplifier specifically acts upon the amplitude of the electric current signal.

Furthermore, independently, the loudspeakers 18 can emit a sound having a frequency corresponding to or associated with, in a one-to-one manner, the frequency of the electric current signal.

In this way, the loudspeakers 18 emit a sound that is characteristic of the operation of the electric motor 3. The sound includes a plurality of frequencies corresponding to the electric current signal, in turn corresponding to the operation of the electric motor 3.

Owing to the above, the advantages of the motor vehicle 1 are evident.

The motor vehicle 1 permits the emission of sounds that are characteristic of the operation of the motor vehicle 3. Therefore, the driver can clearly perceive the operation of the electric motor 3 and, for example, can adjust his/her driving style accordingly.

The obtained sounds fall within a very wide frequency range. This could not be obtained through the mere resonance of mechanical objects close to the electric motor 3 or through the use of fluid-dynamic devices.

Furthermore, the components of the electric motor are present in a small number, are very simple and can easily be found in the market.

Furthermore, the vibrations transmitted to the user through the vibration emitting devices 21 further increase the involvement of the driving driver. Indeed, the coordinated combination of sounds and vibrations allows the user to fully understand the driving conditions of the motor vehicle 1.

Since the user can also be the passenger, besides the driver, the passenger can share the driving experience of the driver, fully understanding the operation of the motor vehicle 1.

Furthermore, the fun of the driver and/or of the passenger undoubtedly increases together with the involvement through sounds and/or vibrations.

Finally, the motor vehicle 1 or the electric motor assembly according to the invention can be subjected to changes and variants, which, though, do not go beyond the scope of protection set forth in the appended claims.

In particular, the number of the components described and shown herein could be different. Similarly, the shape of the components could be different from the one described and shown herein.

Furthermore, the electric motor assembly can be part of the motor vehicle 1 or a separate entity substantially including the motor 3, one or more of the transducers described above and one or more of the loudspeakers 18, considering anyway that the number of the loudspeakers 18 could be different from the one indicated herein; in other words, the motor vehicle 1 or the electric motor assembly could also comprise one loudspeaker 18.

Furthermore, the sound emitting means or apparatus 17 could coincide with one of the loudspeakers 18.

Furthermore, the following examples are part of the description:

example 1: a motor vehicle assembly for a motor vehicle, the assembly comprising

- an electric motor
- transducer means comprising a sensor device configured to detect or generate and consequently detect a magnetic field variation associated with an operation of the electric motor and an emitting device configured to emit an electric current signal as a function of the magnetic field variation, and

a loudspeaker device connected to the emitting device in order to receive the electric current signal emitted through the emitting device and configured to emit a sound corresponding to the received electric current signal;

example 2 according to the example 1: the electric motor is configured to generate the variable magnetic field during the operation, whereby the sensor device is configured to detect the magnetic field variation;

example 3 according to the example 2: the variable magnetic field is a rotating magnetic field rotating at a rotation speed dependant on a supply current supplied to the electric motor;

example 4 according to the example 1: the sensor device comprises a permanent magnet and the electric motor comprises a portion, the portion being movable during the operation in a way corresponding to the operation itself, whereby the permanent magnet is arranged to magnetically interact with the movable portion so as to generate the variable magnetic field;

example 5 according to any one of the preceding examples from 1 to 4: the sensor device comprises an electric circuit or a winding arranged, with respect to the electric motor, in a position such that it is crossed by the variable magnetic field, whereby the variable magnetic field induces an electric current corresponding to the variable magnetic field on the electric circuit, said electric current signal being a function of the induced electric current;

example 6 according to the example 5: the emission device comprises an acoustic amplifier configured to treat or amplify said electric current, thereby providing as an output said electric current signal;

example 7 according to the example 6 or 5: the electric circuit comprises at least one coil wound around a first axis;

example 8 according to the example 7: the coil faces the electric motor;

example 9 according to the example 7: the electric motor comprises a stator or a rotor defining a seat to house the coil, whereby the coil is arranged within the seat.

**Claims**

1. Motor vehicle (1) comprising

   - a body (5) defining a passenger compartment (6) of the motor vehicle (1),
   - an electric axle, in turn comprising an electric motor (3) and at least one movable component distinct from or forming part of the motor (3),
- transduction means configured to detect one or more quantities associated with an operation of the motor (3) or the at least one movable component and to generate at least one first signal related to one or more of said quantities or to said quantities, and
- sound emitting means (17) configured to emit sound as a function of the first signal.

2. The motor vehicle according to claim 1, further comprising a signal processing unit (20) configured to condition the first signal, thereby producing a second conditioned signal, whereby the sound emitting means (17) are configured to emit sound corresponding to the second signal.

3. The motor vehicle according to claim 2, wherein conditioning comprises filtering, wherein the signal processing unit (20) is configured to filter the first signal by one or more frequency-based filters, for example in a cascade, and preferably to amplify an amplitude of the filtered first signal by one or more gains.

4. The motor vehicle according to claim 3, further comprising additional transduction means configured to detect additional quantities associated with an operation of the motor vehicle (1), wherein the signal processing unit (20) is configured to filter the first signal as a function of the additional quantities.

5. The motor vehicle according to any one of claims 2 to 4, wherein the signal processing unit (20) is configured to condition the first signal by performing pitch-shifting on the first signal or by transposing one or more frequencies of at least one contribution of the first signal from a first frequency range to a second frequency range distinct from the first frequency range.

6. The motor vehicle according to claim 5, wherein the first frequency range and the second frequency range are respectively included within a third frequency range between 500 Hz and 10 kHz and a fourth frequency range between 20 Hz and 2 kHz.

7. The motor vehicle according to any one of claims 2 to 6, wherein the sound emitting means (17) comprises at least one loudspeaker (18) connected to the signal processing unit (20) to receive the second signal and configured to emit said sound in a manner corresponding to the second received signal.

8. The motor vehicle according to any one of the preceding claims, wherein the sound emitting means (17) are configured to emit sound inside the passenger compartment (6).

9. The motor vehicle according to any one of the preceding claims, wherein the sound emitting means (17) are configured to emit sound outside the motor vehicle (1).

10. The motor vehicle according to any one of the preceding claims, further comprising one or more vibration emitters (21) coupled to a solid body or panel (7, 9, 10) of the motor vehicle (1) within the passenger compartment (6) and configured to cause a vibration of the solid body or panel (7, 9, 10) in a manner coordinated with the sound emitted by the sound emitting means (17).

11. The motor vehicle according to claim 10, further comprising a seat (7) in turn comprising the solid body or panel (7, 9, 10), such that the vibration of the solid body or panel (7, 9, 10) can be transmitted to a user sitting on the seat (7).

12. The motor vehicle according to claim 10 or 11, wherein the solid body or panel (7, 9, 10) is part of a pedal (10) or a steering wheel (9) of the motor vehicle (1).

13. The motor vehicle according to any one of the preceding claims, wherein the transduction means are configured to detect at least one electrical quantity related to electromagnetic phenomena.

14. The motor vehicle according to any one of the preceding claims, wherein the transduction means comprise

- a first transducer (12) configured to detect a first quantity of said quantities, the first quantity being indicative of a magnetic field generated by the motor (3) or the moving component.

15. The motor vehicle according to any one of the preceding claims, wherein the transduction means comprise

- a second transducer (15) configured to detect a second quantity of said quantities, the second quantity being indicative of a supply current supplied to the motor (3), and/or
- a third transducer (16) configured to detect a third quantity of said quantities, the third quantity being indicative of a voltage at the ends of the motor (3).

16. The motor vehicle according to any one of the preceding claims, wherein the transduction means comprise

- a fourth transducer (11) configured to detect a fourth quantity of said quantities, the fourth quantity being indicative of a vibration with respect to the body (5) of one or more between a casing of the motor (3), the movable component, and the electric axle, and/or
- a fifth transducer (13) configured to detect a fifth quantity of said quantities, the fifth quantity being indicative of a sound pressure wave generated by one or more between the motor (3), the movable component, and the electrical axle.

17. The motor vehicle according to any one of the preceding claims, wherein the transduction means are configured to generate the first signal by applying a sensor fusion algorithm or technique to at least two or more of the detected quantities.

18. The motor vehicle according to any one of the preceding claims, wherein the motor (3) is electric and wherein the transduction means comprise a sensor device (109) configured to detect or generate and consequently detect a variation of a magnetic field associated with an operation of the electric motor (3) and an emitting device (110) configured to emit the first signal, the first signal being an electric current signal as a function of the variation of the magnetic field, wherein the sound emitting means (17) comprises a loudspeaker device (18) connected to the emitting device (110) to receive the electric current signal emitted through the emitting device (110) and configured to emit sound corresponding to the received electric current signal.

19. The motor vehicle according to claim 18, wherein the electric motor (3) is configured to generate the variable magnetic field during operation, wherein the sensor device (109) is configured to detect the variation of the magnetic field.

20. The motor vehicle according to claim 19, wherein the variable magnetic field is a rotating magnetic field with a rotational speed dependent on a supply current supplied to the electric motor (3).

21. The motor vehicle according to claim 18, wherein the sensor device (109) comprises a permanent magnet (113) and wherein the electric motor (3) comprises a portion (120), the portion (120) being movable during operation in a manner corresponding to the operation itself, whereby the permanent magnet (113) is arranged to magnetically interact with the movable portion (120) so as to generate the variable magnetic field.

22. The motor vehicle according to any one of claims 18 to 21, wherein the sensor device (109) comprises an electric circuit or winding arranged with respect to the electric motor (3) in a position so as to be crossed by the variable magnetic field, such that the variable magnetic field induces an electric current corresponding to the same variable magnetic field on the electric circuit, said electric current signal being a function of the induced electric current.

23. The motor vehicle according to claim 22, wherein the emitting device (110) comprises an acoustic amplifier configured to process or amplify said electric current, thereby providing as an output said electric current signal.

24. The motor vehicle according to claim 22 or 23, wherein the electrical circuit comprises at least one coil (112) wound around a first axis (A) and preferably facing the electric motor (3).

25. The motor vehicle according to claim 24, wherein the electric motor (3) comprises a stator (104) or a rotor (105) defining a seat for housing the coil (112), wherein the coil (112) is arranged within the seat.

26. A method for generating characteristic sounds of a motor vehicle during its operation, the method comprising the steps of

- detecting one or more quantities associated with an operation of an electric motor (3) of the motor vehicle or at least one movable component of an electric axle comprising the motor (3)
- generating at least a first signal related to one or more of said quantity or to said quantities, and
- emitting sound as a function of the first signal.

27. The method according to claim 26, further comprising the step of conditioning the first signal, thereby producing a second conditioned signal, whereby sound is emitted in a manner corresponding to the second signal.

28. The method according to claim 27, wherein conditioning comprises filtering the first signal by one or more frequency-based filters, such as in a cascade, and preferably amplifying an amplitude of the filtered first signal by one or more gains.

29. The method according to claim 27 or 28, wherein conditioning comprises performing pitch-shifting on the first signal or transposing one or more frequencies of at least one contribution of the first signal from a first frequency range to a second frequency range distinct from the first frequency range.

30. The method according to claim 29, wherein the first frequency range and the second frequency range are respectively included within a third frequency range between 500 Hz and 10 kHz and a fourth frequency range between 20 Hz and 2 kHz.

FIG. 1

FIG. 2

FIG. 3

FIG. 4

Europäisches
Patentamt

European
Patent Office

Office européen
des brevets

# EUROPEAN SEARCH REPORT

**Application Number**

EP 24 17 0176

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/184946 A1 (JUNG IN-SOO [KR] ET AL) 11 June 2020 (2020-06-11) | 1-9,14, 17-20, 26-30 | INV. G10K15/02 |
| Y | * figures 1, 5, 7A-7C * <br> * claims 1, 4 * <br> * paragraph [0147] * <br> * paragraph [0186] - paragraph [0188] * | 21-25 | ADD. G10K11/24 |
| X | US 2021/379998 A1 (LEE DONG-CHUL [KR] ET AL) 9 December 2021 (2021-12-09) <br> * claims 1-7 * <br> * figure 2 * <br> * paragraph [0063] * <br> * paragraph [0068] * <br> * paragraph [0075] * | 1,2,7-9, 16,26 | |
| X | US 2015/199955 A1 (DRAGANIC ZARKO [US]) 16 July 2015 (2015-07-16) <br><br> * claims 1, 2, 7, 8 * <br> * figures 1, 3, 5 * <br> * paragraph [0013] * <br> * paragraph [0036] * <br> * paragraph [0040] * <br> * paragraph [0044] * <br> * paragraph [0048] * | 1,2,7,8, 10-12, 17,26 | |
| | | | **TECHNICAL FIELDS SEARCHED (IPC)** |
| | | | G10K |
| X | US 2013/343570 A1 (ORTH CHRISTOPH [DE]) 26 December 2013 (2013-12-26) <br> * claims 1-5, 7, 12 * <br> * figure 2 * <br> * paragraph [0017] * <br> * paragraph [0040] - paragraph [0046] * <br> * paragraph [0049] * <br> * paragraph [0054] - paragraph [0058] * | 1,2,7-9, 13-20,26 | |

-/--

The present search report has been drawn up for all claims

| Place of search | Date of completion of the search | Examiner |
|---|---|---|
| The Hague | 23 August 2024 | Lameloise, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

**Application Number**

EP 24 17 0176

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2022/259227 A1 (SHARMA BRAHMADEV [IN]) 15 December 2022 (2022-12-15) * figure 3 * * paragraph [0039] - paragraph [0040] * ----- | 21-25 | |
| | | | **TECHNICAL FIELDS SEARCHED (IPC)** |

The present search report has been drawn up for all claims

| Place of search | Date of completion of the search | Examiner |
|---|---|---|
| The Hague | 23 August 2024 | Lameloise, C |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

......................................................................

& : member of the same patent family, corresponding
   document

EPO FORM 1503 03.82 (P04C01)

page 2 of 2

## ANNEX TO THE EUROPEAN SEARCH REPORT
## ON EUROPEAN PATENT APPLICATION NO.

EP 24 17 0176

This annex lists the patent family members relating to the patent documents cited in the above-mentioned European search report.
The members are as contained in the European Patent Office EDP file on
The European Patent Office is in no way liable for these particulars which are merely given for the purpose of information.

23-08-2024

| Patent document cited in search report | | Publication date | Patent family member(s) | | Publication date |
|---|---|---|---|---|---|
| US 2020184946 | A1 | 11-06-2020 | CN | 111284400 A | 16-06-2020 |
| | | | EP | 3664079 A1 | 10-06-2020 |
| | | | JP | 7511335 B2 | 05-07-2024 |
| | | | JP | 2020091474 A | 11-06-2020 |
| | | | KR | 20200069140 A | 16-06-2020 |
| | | | US | 2020184946 A1 | 11-06-2020 |
| US 2021379998 | A1 | 09-12-2021 | CN | 113752943 A | 07-12-2021 |
| | | | DE | 102020126098 A1 | 09-12-2021 |
| | | | KR | 20210150813 A | 13-12-2021 |
| | | | US | 2021379998 A1 | 09-12-2021 |
| US 2015199955 | A1 | 16-07-2015 | NONE | | |
| US 2013343570 | A1 | 26-12-2013 | CN | 103403795 A | 20-11-2013 |
| | | | DE | 102011001121 A1 | 13-09-2012 |
| | | | JP | 6023094 B2 | 09-11-2016 |
| | | | JP | 2014512997 A | 29-05-2014 |
| | | | KR | 20130118388 A | 29-10-2013 |
| | | | US | 2013343570 A1 | 26-12-2013 |
| | | | WO | 2012119678 A2 | 13-09-2012 |
| WO 2022259227 | A1 | 15-12-2022 | US | 2024270275 A1 | 15-08-2024 |
| | | | WO | 2022259227 A1 | 15-12-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IT 102023000007740